# EUROPÄISCHE PATENTSCHRIFT

(11) **EP 0 440 907 B1**
(45) Veröffentlichungstag und Bekanntmachung des Hinweises auf die Patenterteilung: **10.08.1994**
(21) Anmeldenummer: 90122943.5
(22) Anmeldetag: 30.11.1990
(51) Int. Cl.: G01N 21/21

(54) **Verfahren und Einrichtung zur Durchführung von Haaranalysen**
Method and apparatus for hair analysis
Méthode et dispositif pour l'analyse des cheveux

(30) Priorität: 09.02.1990 DE 4003931
(43) Veröffentlichungstag der Anmeldung: 14.08.1991
(73) Patentinhaber: Schlecht, Willi, D-72213 Altensteig (DE)
(72) Erfinder: Schlecht, Willi, D-72213 Altensteig (DE)
(74) Vertreter: Ott, Elmar, Dipl.-Ing.

(56) Entgegenhaltungen:
- US-A- 3 900 252
- US-A- 4 404 683
- US-A- 4 853 770

## Beschreibung

Die Erfindung betrifft ein verfahren zur Durchführung von Haaranalysen gemäß Anspruch 1 und eine Einrichtung zur Durchführung desselben gemäß Anspruch 4.

Um eine der persönlichen Haarstruktur gerecht werdende Haarpflege oder sonstige Haarbehandlung durchführen zu können, werden mittels elektronischer Meßgeräte haarspezifische Kenndaten ermittelt und zur Durchführung einer Haaranalyse abgespeichert. Ein derartiges Sensorsystem liefert beispielsweise die Firma Revlon, USA unter der Bezeichnung "Sensor MP 200 Hair Computer". Die mit einem derartigen Gerät ermittelten Daten betreffen insbesondere Kenndaten verwendeter Haarpflegemittel, wobei Konzentration des Mittels, pH-Wert, Temperatur, Einwirkungszeit und Porosität gemessen und abgespeichert werden können. Auf diese Weise lassen sich Kenndaten durchgeführter Haarbehandlungen feststellen und abspeichern.

Weiterhin ist zur Bestimmung der Haarqualität ein Polarisationsmikroskop der Firma Redken bekannt, das je nach Haarqualität unterschiedliche Farbspektren sichtbar macht. Die Farbspektren bzw. die sichtbar gemachten Farblinien geben Auskunft über die Beschaffenheit eines untersuchten Haares. Außerdem kann die Dicke eines Haares gemessen werden.

Ein Polarisationsmikroskop zur Haaruntersuchung wird z.B. in der US-A-3 900 252 beschrieben.

Zur Durchführung von Haaranalysen ist es sehr mühsam, die jeweils gespeicherten Daten bezüglich der durchgeführten Haarpflegemaßnahmen und die Kenndaten der Haare in eine sachgerechte Beziehung zueinander zu setzen, um daraus die weiteren zweckmäßigen Haarbehandlungsschritte bestimmen zu können.

Der Erfindung liegt die Aufgabe zugrunde, Kenndaten der Haarstruktur zu dokumentieren und daraus Haarbehandlungsschritte abzuleiten, die die Durchführung einer systematischen Haarbehandlung ermöglichen.

Die Lösung dieser Aufgabe wird durch das im Anspruch 1 angegebene Verfahren sowie durch die in Anspruch 4 angegebene Einrichtung erhalten. Bei in zeitlich aufeinanderfolgenden Haarbehandlungsschritten, die beispielsweise 14-tägig oder monatlich durchgeführt werden, werden Haarkenndaten und Pflegekenndaten unter dem gleichen Datum in einem Speicher eines Computer und in einem Videoaufzeichnungsgerät abgelegt. Diese Kenndaten können dann gemeinsam an einem Sichtschirm in chronologischer Abfolge wiedergegeben werden, um dadurch die Effektivität der durchgeführten Haarbehandlungsschritte deutlich zu machen und Entscheidungshilfe für weitere Haarbehandlungsschritte geben zu können.

Zur Ermittlung der haarspezifischen Kenndaten kann ein optisches Meßsystem Verwendung finden, wobei zu den optischen Informationen digitale Kenndaten im Speicher eines Computers abgelegt werden. Diese digitalen Kenndaten ermöglichen eine Computerauswertung und eine vom Computer zu erstellende Analysegraphik.

Eine Einrichtung zur Durchführung des erfindungsgemäßen Verfahrens verwendet einen Computer mit Tastatur, Speicher und Bildschirmgerät, an den ein elektronisches Sensorsystem zur Ermittlung von Haarpflegedaten und ein Videorekorder angeschlossen ist, wobei die digitalen Informationen und die optischen Informationen am Bildschirmgerät des Computers darstellbar sind. Es kann auch zwischen dem Computer und einem Polarisationsmikroskop eine direkte Datenverbindung bestehen, wobei hierfür erforderlich ist, daß die im Polarisationsmikroskop ermittelten optischen Daten über eine Tastatur oder in anderer Weise in digitale Informationen umgesetzt werden, die dann vom Computer weiterverarbeitet werden können.

Das verwendete Sensorsystem kann einen Temperatursensor und/oder einen elektrischen Widerstandssensor sowie weitere chemisch-physikalische Sensoren besitzen, um haarspezifische und/oder pflegespezifische Kenndaten zu ermitteln. Diese Kenndaten können dann in digitale Daten umgesetzt werden, wozu an sich bekannte Analog-Digitalwandler verwendet werden.

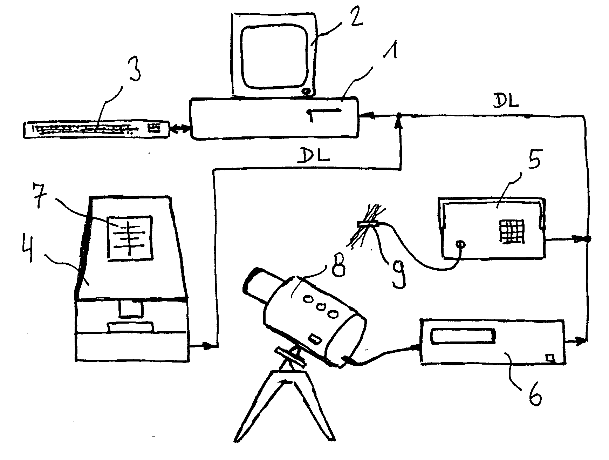

Die Erfindung ist anhand eines in der Zeichnung dargestellten Ausführungsbeispiels näher erläutert.

Die Zeichnung zeigt eine Einrichtung zur Durchführung von Haaranalysen, mit der Kenndaten zu untersuchender Haare und Kenndaten von Haarbehandlungsschritten gemessen und abgespeichert werden können. Ein Computer 1 mit Bildschirmgerät 2 und Tastatur 3 ist über Datenleitungen DL mit einem Polarisationsmikroskop 4, einem chemisch-physikalischen Sensorsystem 5 und einem Videorekorder 6 verbunden. Dabei wird davon ausgegangen, daß über die Datenleitung DL auch Bildinformationen vom Videorekorder 6 zum Computer 1 bzw. dessen Sichtgerät 2 übertragen werden. Grundsätzlich besteht natürlich auch die Möglichkeit, den Videorekorder 6 direkt mit dem Sichtgerät 2 über eine spezielle Bildsignalleitung zu verbinden.

Die am Polarisationsmikroskop 4 ermittelten optischen Kenndaten eines Haares werden an dessen Sichtschirm 7 dargestellt. Mittels einer Videokamera 8 können diese optischen Informationen im Videorekorder 6 auf einer Videokassette abgespeichert werden. Mittels des Sensorsystems 5, welches einen multifunktionalen Sensor 9 hat, können insbesondere Meßdaten bezüglich durchgeführter Haarbehandlungsschritte ermittelt und abgespeichert werden. Der Sensor 9 wird insbesondere bei Anwendung von Pflegemaßnahmen während der Einwirkung eines verwendeten Pflegemittels zur Messung von Konzentration des Pflegemittels, pH-Wert, Temperatur, Einwirkungszeit und Porosität verwendet.

Mit der Einrichtung können über einen längeren Zeitraum die Kenndaten mehrerer Pflegemaßnahmen und die jeweils zugehörigen Haarkenndaten abgespeichert und bei Bedarf am Sichtgerät 2 dargestellt werden. Dadurch ist es möglich, den zeitlichen Verlauf und insbesondere die von Pflegemaßnahmen abhängige Wirkung der Haarpflegemaßnahmen überwachen und darstellen zu können, um daraus die weiteren erforderlichen Haarbehandlungsschritte bestimmen zu können.

Das erfindungsgemäße Verfahren ermöglicht in Verbindung zur Haarstärke bei Haarbehandlungen Kenndaten der Haarstruktur so darzustellen, daß die Durchführung einer Analyse zur Haarbehandlung erleichtert wird. Haarumformungen (Dauerwelle) können anhand der Kenndaten gezielt vorgenommen werden. Das Verfahren ermöglicht nicht nur die Messung der Haarstärke und Haarstruktur, sondern auch der Haarfarbe sowie die Veränderung der Haarqualität durch chemische oder physikalische Einflüsse vor, während und nach einer durchgeführten Haarbehandlung. Dabei werden auch Einwirkzeiten bei Haarbehandlungen, insbesondere bei Umformungen und Haarkuren, individuell bestimmt. Auf der Grundlage dieser Meßdaten kann beispielsweise bei einer Dauerwelle die Wickelstärke in Abhängigkeit zur Haarstärke zur Erzielung optimaler Ergebnisse ausgewählt werden.

## Patentansprüche

1. Verfahren zur Durchführung von Haaranalysen unter Verwendung eines Polarisationsmikroskops mit dem optische Haarkenndaten ermittelt werden, **dadurch gekennzeichnet**, daß die in mehreren Haaruntersuchungen mittels eines Polarisationsmikroskops (4) gewonnenen optischen Informationen mittels eines Videorekorders (8) als haarspezifische Kenndaten gespeichert werden, daß zugehörige chemische und/oder physikalische Pflegekenndaten mittels eines elektronischen Sensorsystems ermittelt und in einem Computer (1) gespeichert werden, und daß die über einen längeren Zeitraum gespeicherten Haar- und Pflegekenndaten der Haare einer bestimmten Person chronologisch an einem Bildschirmgerät (2) wiedergegeben werden.

2. Verfahren nach Anspruch 1, **dadurch gekennzeichnet**, daß zu den optischen Informationen digitale Kenndaten im Speicher des Computers (1) chronologisch abgespeichert werden.

3. Verfahren nach einem der Ansprüche 1 oder 2, **dadurch gekennzeichnet**, daß die optischen Informationen, insbesondere ein den Haarzustand kennzeichnendes Farbspektrum des Polarisationsmikroskops (4) gleichzeitig mit digitalen Kenndaten auf einem Bildschirmgerät (2) dargestellt werden.

4. Einrichtung zur Durchführung des Verfahrens nach einem der vorhergehenden Ansprüche, **dadurch gekennzeichnet**, daß ein Computer (1) mit Speicher, Bildschirmgerät (2) und Tastatur (3) mit dem Datenausgang eines elektronischen Sensorsystems (5) und einem Ausgang eines Videorekorders (6) über eine Datenleitung (DL) verbunden ist, und daß die digitalen Informationen des Sensorsystems (5) und die Bildinformationen des Videorekorders (6) am Bildschirmgerät (2) darstellbar sind.

5. Einrichtung nach Anspruch 4, **dadurch gekennzeichnet**, daß eine Datenleitung (DL) zwischen einem Polarisationsmikroskop (4) und Computer (1) besteht.

6. Einrichtung nach einem der Ansprüche 4 oder 5, **dadurch gekennzeichnet**, daß das Sensorsystem (5) einen Temperatursensor und einen Widerstandssensor in Form eines multifunktionalen Sensors (9) hat.

## Claims

1. Method for performing hair analyses using a polarizing microscope for determining optical hair characteristics, characterized in that the optical informations obtained in several hair tests by means of a polarizing microscope (4) by means of a video recorder (8) are stored as hair-specific characteristics, that associated chemical and/or physical treatment characteristics determined by means of an electronic sensor system are stored in a computer (1) and that the hair and treatment characteristics of the hair of a particular person stored for a long period of time are chronologically displayed on a display screen (2).

2. Method according to claim 1, characterized in that digital characteristics relative to the optical informations are stored chronologically in the memory of the computer (1).

3. Method according to one of the claims 1 or 2, characterized in that the optical informations, particularly a colour spectrum of the polarizing microscope (4) characterizing the hair state are displayed simultaneously with the digital characteristics on a display screen (2).

4. Device for performing the method according to one of the preceding claims, characterized in that a computer (1) with a memory, display screen (2) and keyboard (3) is connected to the data output of an electronic sensor system (5) and an output of a video recorder (6) across a data line (DL) and that the digital informations of the sensor system (5) and the image informations of the video recorder (6) can be displayed on the display screen (2).

5. Device according to claim 4, characterized in that there is a data line (DL) between a polarizing microscope (4) and the computer (1).

6. Device according to either of the claims 4 and 5, characterized in that the sensor system (5) has a temperature sensor and a resistance sensor in the form of a multifunctional sensor (9).

## Revendications

1. Procédé pour réaliser des analyses de cheveux en utilisant un microscope polarisant au moyen duquel on détermine des données optiques caractéristiques des cheveux, caractérisé par le fait que les informations optiques obtenues au cours de plusieurs examens des cheveux au moyen d'un microscope polarisant (4) sont mises en mémoire au moyen d'un magnétoscope (8) sous la forme de données caractéristiques propres aux cheveux, par le fait que des données caractéristiques chimiques et/ou physiques associées aux soins sont obtenues au moyen d'un système capteur électronique, et qu'elles sont mises en mémoire dans un ordinateur (1), et par le fait que les données caractéristiques des cheveux et des soins qui ont été mises en mémoire sur une longue période pour les cheveux d'une personne déterminée sont reproduites chronologiquement sur un moniteur (2).

2. Procédé selon la revendication 1, caractérisé par le fait que des données numériques caractéristiques relatives aux informations optiques sont enregistrées chronologiquement dans la mémoire de l'ordinateur (1).

3. Procédé selon l'une des revendications 1 et 2, caractérisé par le fait que les informations optiques, et en particulier un spectre coloré du microscope polarisant (4) qui caractérise l'état des cheveux, sont représentées sur un moniteur (2) en même temps que des données numériques caractéristiques.

4. Dispositif pour la mise en oeuvre du procédé selon l'une des revendications précédentes, caractérisé par le fait qu'un ordinateur (1) pourvu d'une mémoire, d'un moniteur (2) et d'un clavier (3) est relié par l'intermédiaire d'une ligne de transmission des données (DL) à la sortie des données d'un système capteur électronique (5) et à une sortie d'un magnétoscope (6), et par le fait que les informations numériques du système capteur (5) et les informations relatives à l'image du magnétoscope (6) peuvent être représentées sur le moniteur (2).

5. Dispositif selon la revendication 4, caractérisé par le fait qu'il existe une ligne de transmission des données (DL) entre un microscope polarisant (4) et l'ordinateur (1).

6. Dispositif selon l'une des revendications 4 et 5, caractérisé par le fait que le système capteur (5) comporte un capteur de température et un capteur de résistance sous la forme d'un capteur à fonctions multiples (9).
